# EUROPEAN PATENT APPLICATION

(11) **EP 3 933 757 A1**
(43) Date of publication of application: **05.01.2022**
(21) Application number: 20183464.5
(22) Date of filing: 01.07.2020
(51) Int. Cl.: G06T 7/00, A61B 6/00, G06T 7/11

(54) **METHOD OF DETERMINING CLINICAL REFERENCE POINTS AND PRE-SURGICAL PLANNING**

(71) Applicant: UAB "Ortho Baltic", 51124 Kaunas (LT)
(72) Inventor: KOSTKEVICIUS, Gediminas, Kaunas (LT); GAURILCIKAS, Mindaugas, Kaunas (LT); RONDAMANSKIENE, Milda, Kaunas (LT)
(74) Representative: J A Kemp LLP

(57) **Abstract**

A method, implemented in a computer system, of determining, from imaging data and clinical case data the position of a plurality of clinical reference points on a 3D bone model of a portion of the human body, the method including the steps of: generating a patient-specific 3D bone model from the imaging data; zoning the patient-specific 3D bone model into segments and determining pathology-affected segments and pathology-free segments of the 3D bone model based on the clinical case data; determining, from a plurality of stored parametrized exemplar models of parts of the human skeleton system, each including one or more clinical reference points within healthy norms, an exemplar model corresponding to each of the segments; determining, from a plurality of stored parametrized pathology base models, a pathology base model corresponding to each pathology-affected segment or segments of the patient-specific 3D anatomical model, which most closely matches the clinical case data; determining the clinical reference points falling in the pathology-free segments using bone-specific algorithms based on the determined exemplar model; and determining the clinical reference points of the pathology-affected segments of the patient-specific 3D bone model using bone-specific algorithms based on the determined exemplar model adjusted using the determined pathology base model.

## Description

The present invention generally relates to a method of determining clinical reference points and a system for performing such a method. The present invention particularly, but not exclusively, relates to methods which are implemented in the field of computer-aided planning of surgical procedures and/or the design and/or customisation of surgical implants and/or surgical guides.

Pre-surgical planning is a method of visualizing a surgical intervention. In the field of surgical implants, this may include one or more of: the selection of best fitting standard implant or setting requirements to the design of patient-specific one; setting requirements for the design of single use patient-specific surgical guides used both with standard and patient-specific implants; selecting appropriate supporting components (e.g. screws) and surgical tools, for the fulfilment of the treatment goals; and simulating pre-surgical planning in 3D virtual space on patient-specific anatomical models using standard or patient-specific implants together with patient-specific surgical guides (if applied), screws and other accompanying components associated with an implant (this may include bone segment repositioning in the context of the final outcome). All of these are performed with the ultimate objective of predefining the surgical steps.

While the conventional techniques of surgical planning are still being carried out in many healthcare centres in the world, 3D planning for surgery has become increasingly popular among many clinicians over the last decade or so. 3D pre-surgical planning helps surgeons to visualize and understand cases better and can make it possible to avoid many complications. However, 3D pre-surgical planning is still quite new, so paradigm shifts pose various challenges. There are also a number of problems with existing pre-surgical planning methods. Although these problems may seem trivial in isolation, when added together, the results can be significant.

Most existing 3D pre-surgical planning software, for example, Osirix, Fovia (DICOM standard radiological image viewers), Mimics (3D reconstruction), is very specialised and only can be used for very specific tasks (e.g. only radiological images review, only 3D reconstruction, only implant selection and positioning etc.). This causes many problems, such as incompatibility, prolonged workflow because of a need to open, load, and/or transfer data between different software.

For example, Osirix is only suitable for pre-surgical planning with "clean" radiology images, as Osirix is not capable of "filtering" artefacts. Therefore, this system is only really suitable for cranial surgery planning, as this part has the lowest probability of artefacts, and only if patient has no cranial plate or other surgical device implanted, otherwise pre-surgical planning becomes impossible due to excessive artefacts at the surgical site.

Another significant disadvantage that it is not possible to load the pre-designed surgical guides and implant models, thus assessing the most appropriate approach angles.

The above systems do not provide tools for using or accumulating data describing patient's anthropometric data, the localization, type and degree of their clinical pathology, comparing, or structuring information. Results of pre-surgical planning can be saved as illustrations, without the possibility of collecting and comparing historical data from past surgeries, thus accumulating good surgical practice.

Other existing 3D pre-surgical planning software is also very specialised, for example, MediCad (hip joint), ProPlan CMF (cranio-maxillo-facial), and only can be used for specific body sites (for example hip, knee etc.). This does not allow a user (e.g. a surgeon) to have a holistic view of the case, to assess the impact of treatment on adjacent joints, for example, aligning the knee only, can cause misalignment of other joints.

Most existing 3D pre-surgical planning software is also compatible only with products from one or a limited selection of implant manufacturers, for example, Zimmer^{®} PSIKnee Planning (only Zimmer surgical guides for Zimmer standard implants), and only can be used with specific implants (only exact model implants, or only exact manufacturer implants etc.). This limits the surgeon's choice and may not lead to the most appropriate solution for the patient.

There is some more universal 3D pre-surgical planning software on the market (for example PME planner) which generates a 3D anatomical model of patient's bones from a medical imaging data set. Also, a set of 3D models of manufacturer's implants are pre-loaded in the software that allows the user to place the components of desired implant to the 3D model of patient's bony anatomy, to designate position and alignment of the implant on the bone.

However, in the more universal pre-surgical planning software such as PME planner the user typically has to perform the majority of planning steps manually. For example, in the pre-surgical planning process, clinical (anatomical) reference points of corresponding skeletal element (bone) need to be determined. The traditional determination of clinical reference points is manual or semi-manual. They need to be manually drawn by the doctor's prior knowledge (sometimes even by few different professionals in order to have unbiased opinion on current case). This method of determination of clinical reference points is inefficient, time consuming (particularly if a second opinion is required from a different surgeon) and risks being inaccurate if done by only one surgeon.

It can also be difficult to operate such software without manufacturer involvement in planning process, because unexperienced surgeon without previous knowledge of 3D pre-surgical planning cannot execute planning without guidance or suggested steps.

Automated 3D reconstruction of 3D anatomical models from image data is available in some existing systems (e.g. InVesalius, PME planner), but can be highly unreliable, because it does not reproduce the natural bone morphology in respect to neighbouring tissues due to presence of different kind artefacts in radiological images and does not separate the boundaries of articulating surfaces in case of cartilage tissue wear.

An inaccurate 3D anatomical model can cause significant problems during surgical intervention. The model is normally used to select the standard implant most appropriate for treatment, or to design and manufacture patient-specific implants and patient-specific surgical guides. Therefore, implant manufacturers often do not recommend to using automatic 3D reconstruction systems in any stage of surgical implants creation due to high probability of artefacts on radiological images that cannot be removed automatically, which causes inaccuracies on generated patient-specific 3D models. Such automated 3D reconstruction is therefore intended to be used as reference only for DICOM images quality review and case visualization.

Patient-specific implants are also shifting the paradigm in pre-surgical planning. However, many surgeons have little or no experience of using such implants or planning surgery with them. The design of patient-specific implants and instruments is mostly done by direct communication between surgeon and manufacturer via emails or in-person meetings which takes time and is costly.

Planning guidance could also help surgeons to avoid errors which could occur from a lack of practical or literary knowledge in the treatment of rare and complex pathologies.

Conventional planning software does not allow the user to simply input each of their alignment goals and have the system automatically output a transformation (positioning) between implant and the bone. In case of patient-specific implants their alignment to the bone is self-evident. Using standard implants for surgical treatment, the alignment could be realized in reversable way, since the implant is not fitted to the bone, but rather the bone to the implant.

A system which is capable of automatically aligning the implant to the bone in 3D virtual space without any manual user adjustments, would greatly reduce the time spent creating the pre-surgical plan, which saves money for the patient and health care facility.

Most existing systems offer simple questionnaires containing a few questions or steps in order to evaluate created or adapted (in case of standard implants) medical instruments or implants. These simplified questionnaires leave a residual risk of inaccuracy or design error, which will only become apparent during the surgery. A more in-depth validation process which, could, for example, include evaluation of reconstruction accuracy of anatomical models, design of surgical guides and (or) surgical implants, and/or evaluation of quality of assembly, could help to more thoroughly evaluate and validate designed medical instrument(s) and/or implant(s) for use in surgery, thereby improving system reliability.

Chinese patent application CN 109859213 discloses a method for detecting key clinical reference points of bone joint replacement surgery by comparing segmented images (from CT images taken from a patient) with corresponding and matching standard reference images from a skeleton map library, containing standard reference images of different parts of patient's bones.

In the method described in this document, the reference points are placed on the DICOM images, so there is a high risk of errors and misalignment due to artefacts or blurred contours on the radiographic images. The reference point detection method described uses an initial set of prepared skeleton map libraries to identify reference points. A new set of points is added to the point map library after delineation by an expert, but the points are determined by average value of multiple points.

The method described uses a skeleton map library, which contains standard reference images of different patient's bones or different body parts, for key points determination by corresponding and matching standard reference images from skeleton map library with the patient's CT scan. That can cause difficulties and inaccuracies because exact matches usually do not exist (or alternatively a very extensive library is required).

Thus, all of the above systems have technical problems that prevent reconstruction of patients' 3D anatomical models from radiological imaging and the marking of clinical reference points on these 3D anatomical models the following operations from being fully automated and their accuracy ensured.

None of the above software systems, which are used in one way or another for pre-surgical planning, have the functionality such as automatic retrieval of historical 3D clinical data in a clinical database based on pathology in the 3D model, automatic implant 3D model alignment to the bone, etc., since neither of these systems has the technical solution to automate the 3D clinical data structuring, including the structuring of clinical pathology data in a 3D anatomical model.

One object of the present invention is to provide a method and computer system, for example for 3D pre-surgical planning, which can automatically determine the position of a clinical reference points from radiological imaging and clinical data and validate their accuracy.

A further object is to provide a method and computer system which can structure 3D clinical (anatomical) data using those determined reference points for example for the automation of the specific pre-surgical planning steps and/or for the system training to provide its users with clinical decision support functionality based on accumulated good clinical practice data.

A further object of the present invention is to provide a method and computer system for 3D pre-surgical planning which can select a best-fitting standard implant or design suitable patient-specific implants and/or patient-specific surgical guides based on input radiological imaging and other structured clinical data.

A first aspect of the present invention provides a method, implemented in a computer system, of determining, from imaging data and clinical case data the position of a plurality of clinical reference points on a 3D bone model of a portion of the human body, the method including the steps of: generating a patient-specific 3D bone model from the imaging data; zoning the patient-specific 3D bone model into segments and determining pathology-affected segments and pathology-free segments of the 3D bone model based on the clinical case data; determining, from a plurality of stored parametrized exemplar models of parts of the human skeleton system, each including one or more clinical reference points within healthy norms, an exemplar model corresponding to each of the segments; determining, from a plurality of stored parametrized pathology base models, a pathology base model corresponding to each pathology-affected segment or segments of the patient-specific 3D anatomical model, which most closely matches the clinical case data; determining the clinical reference points falling in the pathology-free segments using bone-specific algorithms based on the determined exemplar model; and determining the clinical reference points of the pathology-affected segments of the patient-specific 3D bone model using bone-specific algorithms based on the determined exemplar model adjusted using the determined pathology base model.

The method may provide automated initial identification of clinical reference points on the generated 3D patient-specific anatomical model using Hierarchical Matching Algorithms (HMAs).

The generation of the patient-specific 3D bone model from the imaging data may be performed by segmenting multi-layer radiographic examination data and combining slices into a solid 3D model by using analytical image reconstruction filtered-back projection (FBP) and/or FDK cone-beam reconstruction algorithms.

The generation of the model may include a step of automatic removal of artefacts. This step may use mathematical models describing the morphology of the human skeleton parts and operating with corresponding anatomical exemplar and pathology base models. This may be followed by automatic evaluation of the accuracy of the generated 3D surfaces, which may be performed using a convolutional neural network which has been previously trained with structured date from validated 3D clinical cases.

The method may also include the step of checking the accuracy of the automatically determined clinical reference points, potentially followed by correcting (if necessary) and validating the data. In the first stage of the functionality development, this may be done by manually by an expert.

After initial training of the system to improve the precision of the clinical reference points identification and to validate the data using a Machine-Learning Convolutional Neural Networks (ML CNNs) based algorithm, automated fine-tuning of the accuracy of clinical reference points automatically identified using HMAs algorithms may be carried out using a ML CNNs based algorithm, including correction of their localization (if necessary). Data validation may also be carried out by the ML CNNs-based algorithm.

The method may also include repetitive training of the ML CNNs algorithm using new clinical data entered to the clinical database after each pre-surgical planning session performed using the method.

The method may automatically identify and mark clinical reference points on the three-dimensional (3D) patient-specific anatomical model using HMA algorithms. This identification is carried out in two stages. In the first stage, clinical reference points are identified and marked on a 3D anatomical model. However, the algorithms do not always provide accurate clinical reference points. Especially when those points are located in the pathology affected segments of human bones.

Therefore, in the second stage, after performing the automatic determination of a clinical reference points, the accuracy of the determination of reference points on patient's 3D anatomical model (and therefore accuracy of their coordinates) is evaluated and, if necessary, correction and validation steps are performed. What actions are performed in the second stage and who performs them may depend on the maturity phase of the system.

During the initial stage of the functionality development, the result of automatic determination of a clinical reference points may be verified and manually adjusted by an expert during pre-surgical planning process (e.g. by a surgeon alone, when pre-surgical planning is done exclusively using standard implants, or by a surgeon and clinical engineer, when patient-specific implants and / or patient-specific surgical guides are used in pre-surgical planning). Validated clinical reference points can serve as the basis for structuring information describing the 3D anatomical model and also, in some embodiments, for the segmentation (zoning) of the model to different, in some embodiments, to partly overlapping zones, used in the stage of automatic validation of determined clinical reference points.

This data can also be used later for the initial training of the system to improve precision of clinical reference points determination on a virtual patient-specific 3D anatomical models of the bone carried out by the system in the process of pre-surgical planning. For the system training in a multistage fashion a Machine-Learning Convolutional Neural Networks (ML CNN) based algorithm, combining different CNN's into deep neural network, may be used.

Once the system completes the initial training in determination of clinical reference points and reaches maturity phase, the accuracy of the clinical reference points may be evaluated, corrected (if applicable) and validated by the system itself. If the system detects abnormal location of the clinical reference point(s), or significant anthropometric (cephalometric) deviation(s) in respect to the exemplar model, and cannot associate it with any clinical pathology base model (expression of pathology in the 3D anatomical model), the system may automatically inform an expert that accuracy of the identification done should be checked and validated manually.

The method of this aspect may thus include the step of manual validation of clinical reference points determined on patient-specific 3D anatomical models by experts carrying out pre-surgical planning using the computer system, which may also include storing both pre-validated and validated data in a clinical database in the computer system.

The method may alternatively or additionally include the step of training a convolutional neural network algorithm using a plurality of the problem / solution pairs consisting of two sets of clinical reference points, each pair representing the results of: a) an automatic determination of the clinical reference point and b) a corresponding validated counterpart, to determine clinical reference points. The convolutional neural network algorithm may combine and customize different architectures already used in 3D and point cloud applications, together with hybrid schemes, including handcrafted features. The handcrafted features, such as a parametrized scalable exemplar model with hierarchical bone zoning map (which includes clinical reference points established within healthy norms) and clinical pathology base models can provide both a head start and early improvement over the cases in which a convolutional neural network has to learn everything from scratch.

Once trained, the convolutional neural network may be used to provide an automatic evaluation of the accuracy of the determined clinical reference points.

In certain embodiments the steps of determining clinical reference points may also use the convolutional neural network.

The convolutional neural network may be based on the compact input encoding of the patient-specific 3D bone model. This may be generated as a result of fine segmentation and may be represented by a scene graph. A scene graph can preserve important properties of the input data. The scene graph can also implicitly mean that the clinical reference points are determined by a linear combination of 3D convolutions of the 3D bone model, which enables the extraction invariant volumes and surfaces properties of the input data.

The method may also include the learning of features of volumes and surfaces (and detectors for those features), as well as their incorporation into the convolutional neural network. The feature detectors can provide a higher-level input to extract additional invariants, and after enough features of a triangle or quadrilateral mesh representing the regions of the bone around a reference point have been learned, the output space of the trained deep convolutional neural network may encode critical properties of the problem of interest and in a final training stage the network can learn how to determine clinical reference points.

Preferably the method of this aspect includes pre-processing steps, such as re-orienting a patient-specific 3D anatomical model in a coordinate space to align the latter to the coordinate space, reducing the complexity of patient-specific 3D anatomical model, by filtering excess triangles followed by zoning (segmentation) of the patient-specific 3D anatomical model of the bone. These pre-processing steps are ideally carried out before the determining steps.

In particular, re-orienting may include the steps of: determining, for volume (e.g. a sphere) centred on the centre of the patient-specific 3D anatomical model, the number of points of the patient-specific 3D anatomical model falling within a predetermined area on the surface of that e. g. sphere; comparing determined number to the corresponding determination from an exemplar model which is the same portion of the human body and which is aligned to the coordinate space; determining an angle of displacement between the patient-specific 3D anatomical model and the exemplar model for comparison; and re-orienting the patient-specific 3D anatomical model so that the angle of displacement is zero (or close to it).

Re-orienting allows a more accurate mapping of patient-specific 3D anatomical model, as it can ensure that the latter and exemplar (parametrized) anatomical models are aligned to the same coordinate system when they are being compared.

The step of reducing the complexity of patient-specific 3D anatomical model may include the step of removing redundant information from the patient-specific 3D anatomical model.

Reduction in this fashion can reduce the data size of the patient-specific 3D anatomical model, which can make it easier to process the model in future operations, and/or increase the speed of processing (or correspondingly reduce the computing demands on the computer system).

In some embodiments the step of removing redundant information includes: for each of a plurality of triangles in the patient-specific 3D bone model, determining the angle between the normal to said triangle and a vector passing from the centre of the model to the middle of the triangle; and removing from the model triangles for which the determined angle exceeds a predetermined amount.

This approach can allow data which is of lesser clinical relevance, for example data relating to the inside of the model, to be removed, thus reducing the amount of data in the model whilst retaining all or almost all of the clinically important information.

In certain embodiments, the steps of determining the clinical reference points use a hierarchical geometric model (HGM) which represents the region of the bone around a reference point and is composed of a set of geometric constraints on a 3D bone model as well as of the set of positive and negative primitive volumes.

The primitive volumes may each have specific parameters with the established limits defining acceptable values of the parameter. Each volume and each parametrized geometric relationship between two HGM subsets may correspond to a defining constraint that the 3D anatomical model of a bone must comply with in order to identify the clinical reference point.

Basic values of an HGM may be combined pairwise using set operations with parameterized geometric relationships between the two volume operands in the set operation.

Different matching techniques may be used for the volumes matching to natural surface of 3D bone model, including, but not limited to, any or all of prioritization of constraints, expression of constraints that must hold simultaneously, followed by establishing constraints on matches and the geometric relationships between matched volumes to eliminate all but the highest quality of these matches.

These techniques can enable reliable and repeatable identification of parts and features of the 3D bone model.

The step of zoning can allow the determining steps to find the closest matching model for each segment of 3D anatomical model instead of looking for an exact match for the complete model.

The step of zoning can narrow down the possible localization of clinical reference points, and thereby maximise the accuracy of the separation of bone segments affected by pathology from the remainder of the bone within natural limitations.

The step of zoning may include the steps of: coarse zoning the 3D bone model to localize clinical reference points within sub-exemplar models and to separate pathology-affected segments from pathology-free segments; and fine segmenting the 3D bone model into segments based on already determined clinical reference points and placing those segments into a hierarchy, representing a geometrical model of 3D clinical-anatomical data sets.

The coarse zoning may, in some embodiments, localize the clinical reference points in partly overlapping zones. It may alternatively or additionally, localize clinical reference points within sub-exemplar models represented by an HGM of the region of the bone around a reference point (or group of points).

The hierarchy results from the fine segmenting can be used for training of the convolutional neural network algorithm and/or for validating clinical reference points using the trained algorithm, as well as for updating parametrized pathology base models.

The plurality of stored parameterized exemplar models and/or the plurality of stored parameterized pathology base models may include a plurality of models for which the clinical reference points have previously been determined using a method according to any one of the preceding claims. These models can be highly structured, isotropic patient-specific 3D bone models, represented by contiguous 3D coordinates systems, together with other clinical case data, like projections and volumetric encodings. These models may be stored in a clinical database.

The method of this aspect may include any combination of some, all or none of the above-described preferred and optional features.

A further aspect of the present invention provides a method of pre-surgical planning of implant surgery, the method including the step of determining the position of at least one clinical reference point using a method according to the above aspect, including some, all or none of the optional and preferred features of that aspect.

A further aspect of the present invention provides a method of designing a patient-specific implant or a surgical guide for use in surgery, including but not limited to, orthopaedic surgery (e.g. joint replacement, osteotomy, trauma surgery), maxillofacial surgery (e.g. joint replacement, orthognathic surgery, facial reconstruction surgery), neurosurgery (e.g., cranioplasty, spinal surgery), the method including the step of determining the position of at least one clinical reference point using a method according to the first aspect above, including some, all of none of the optional and preferred features of that aspect.

A further aspect of the present invention provides a method, implemented in a computer system, of 3D pre-surgical planning, the method including the steps of: providing the computer system with a parametrized description of the clinical case pathology data and uploading radiological data of the human skeleton element affected by clinical case pathology; generating a patient-specific 3D bone model of the human skeleton element from the imaging data; determining the position of a plurality of clinical reference points in the patient-specific 3D bone model using a method according to the above first aspect, including some, all or none of the optional and preferred features of that aspect; and generating a preliminary design of a patient-specific implant or a patient-specific surgical guide based on the patient-specific 3D bone model and at least one determined clinical reference point.

The method of this aspect may include the further step of navigating the system user through a pre-surgical planning process including, but not limited to, one or more of the steps of: selection of one or more different options of pre-surgical planning, such as similar clinical case search in the clinical database, pre-surgical planning with standard implants (including selection of a best-fitting implant from the library of standard implants), pre-surgical planning with patient-specific implants, and/or pre-surgical planning with or without patient-specific surgical guides (including establishing design requirements for made-to-order products). The navigation may be self-adjusting to the specific clinical case and the system may advise the user on the optimal sequence of pre-surgical planning steps. The system may provide active support for the system user by responding to his actions and/or evaluating the validity of surgeon actions based on good surgical practice rules.

The step of generating of the preliminary design of patient-specific implants or patient-specific surgical guides may use a convolutional neural network based on the patient-specific 3D bone model describing the morphology of human bones and at least one determined clinical reference point. The convolutional neural network may be trained on comparing automatically-generated 3D models of patient-specific implants (or surgical guides) with their validated counterparts.

A two stage process of validation may be carried out, firstly in manufacturing site during the stage of product design, followed by design validation by the system user in the final stage of pre-surgery planning.

The method may include the further step of re-navigating the system user through a pre-surgical planning process with 3D virtual models of the designed patient-specific implant and/or patient-specific surgical guide, provided by manufacturer of medical devices.

Feedback from the surgeon and/or the patient may be stored in a clinical database as may all the pre-surgery planning data.

The method of this aspect may further include the step of searching for clinical cases of interest for the parametrized description of the clinical case pathology data by using one or more of: queries based on clinical reference points, anthropometric or cephalometric measurements, and surgical planning decisions used, as well as comparing 3D anatomical models representing both anthropometric characteristics of anatomical models and expressions of the clinical pathology in a 3D form.

In the methods of any of the above aspects, the stored parametrized exemplar models of the human skeleton system may be updated by the system in an iterative way, for example using a convolutional neural network, which has been trained on structured and validated clinical case data stored in the computer system and the updates are performed both to the entire anatomical model and to individual segments thereof.

In the methods of any of the above aspects, the stored clinical pathology base models may be updated by the system in an iterative way, for example using a convolutional neural network, which has been trained on structured and validated clinical cases data stored in the computer system, and links a stored clinical pathology base model with a variety of pathology expressions in 3D structured real clinical case data. The updating may further include the step of performing parametrization of pathology description of a clinical case, provided by the system user, and relating this description with the base model of the relevant clinical pathology.

Further aspects of the present invention provide: a computer program comprising computer readable instructions which, when run on suitable computer apparatus, cause the computer apparatus to perform the method of any one of the above aspects, including some, all or none of the optional and preferred features of those aspects; a computer readable medium having stored thereon such a computer program; and an apparatus having a processor specifically adapted to carry out the steps of the method of any one of the above aspects, including some, all or none of the optional and preferred features of those aspects and/or to run said computer program.

Embodiments of the present invention will now be described by way of example with reference to the accompanying drawings in which:
Fig. 1 is a general flow chart showing the steps in a pre-surgical planning process;
Fig. 2 is a flow chart showing the steps in a pre-surgical planning process using a patient-specific implant (PSI) according to an embodiment of the present invention;
Fig. 3 is a flow chart showing the steps in a pre-surgical planning process using a standard implant according to an embodiment of the present invention;
Fig. 4 is a flow chart showing the steps in a pre-surgical planning process using a patient-specific surgical guide (PSSG) according to an embodiment of the present invention;
Fig. 5 is a flow chart showing the process of automatic clinical reference points determination; and

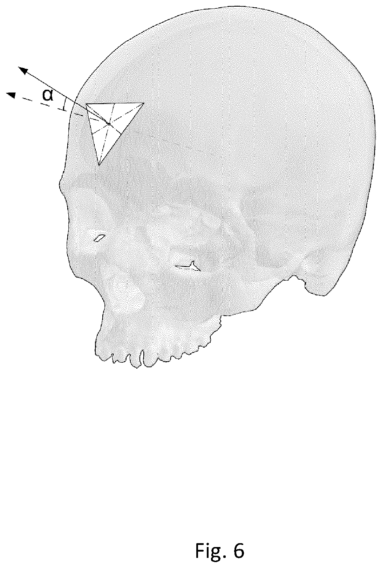

Fig. 6 is a schematic showing normal calculation as part of the process of filtering out excess triangles in the 3D patient-specific anatomical model.

Embodiments of the present invention provide 3D model-based pre-surgical planning software with automatic structuring of 3D clinical data. The software has self-learning functionality based on system training using structured and validated historical clinical data stored in a clinical database. Further embodiments provide computer systems with processors running such software. Further embodiments provide an autonomous clinical decision support system based on structured 3D clinical data of good clinical practice.

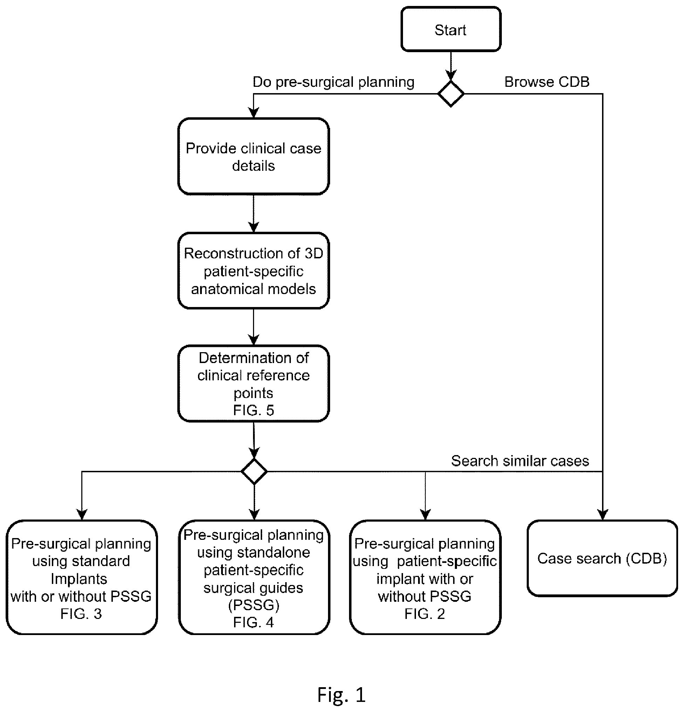

Fig. 1 shows the general steps in the operation of the system according to an embodiment of the present invention and illustrates how the various computational modules and processes described in more detail can be integrated together in a system for pre-surgical planning of implants and surgical guides, or simply used to search a clinical database (CDB).

In certain embodiments of the present invention, the software is hosted remotely and accessed by a user (such as a surgeon or clinical engineer) through a web browser.

Embodiments of the present invention are comprised of a number of functional elements, including one or more of: an automatic 3D reconstruction function; an automatic clinical reference points determination function; an automatic 3D clinical data structuring function; a function for identical or similar clinical case searching in a structured clinical database; user navigation through pre-surgical planning and validation of implant and/or surgical guides design function; and an implant and/or surgical guide design automatic generation and positioning function.

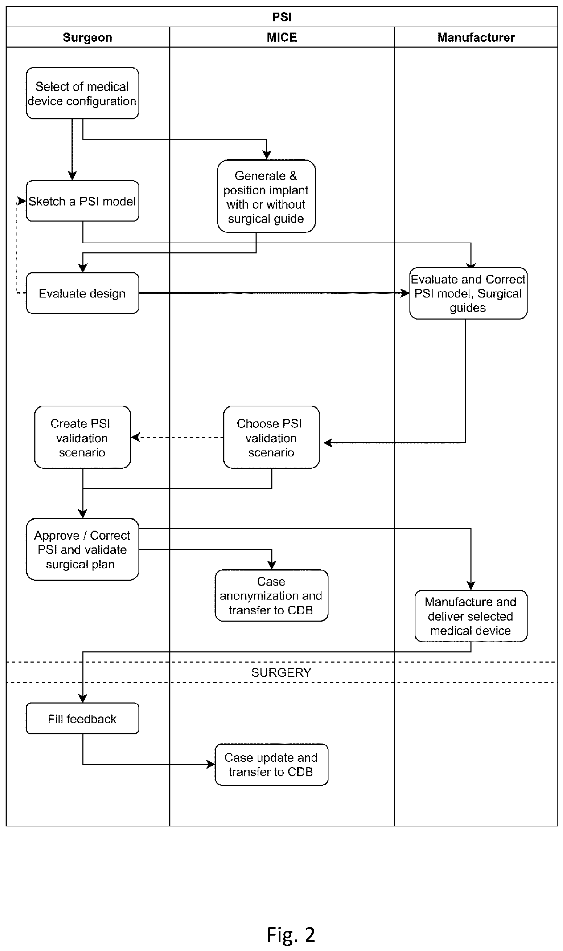

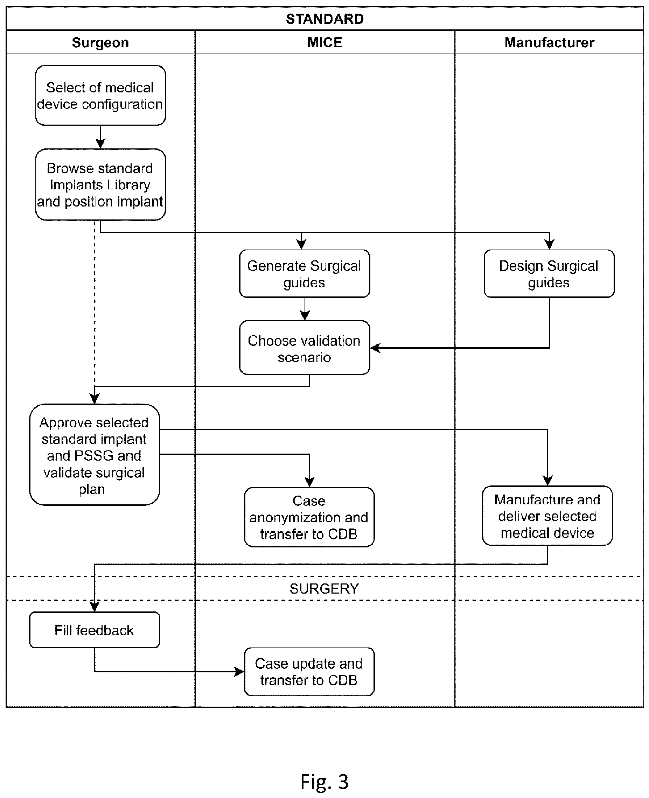

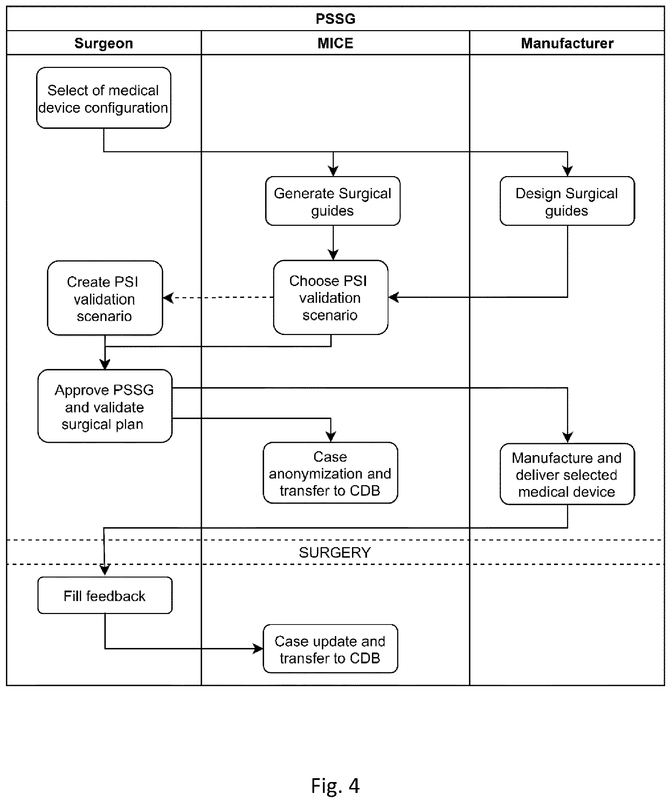

In embodiments of the present invention, these functional elements are used in pre-surgical planning of implant surgery, including pre-surgical planning which includes the design of a patient-specific implant as shown in outline in the flowchart of Fig. 2, pre-surgical planning which includes the selection of a standard implant as shown in outline in the flowchart of Fig. 3, and/or pre-surgical planning which includes the design of patient-specific surgical guides as shown in outline in the flowchart of Fig. 4.

### Algorithms - general

Hierarchical Matching Algorithms (HMAs), which are used in the method of the embodiments described below, are a traditional, non-AI, approach to determine skeletal reference points on a patient-specific 3D anatomical model. These algorithms are bone-specific and use a 3D exemplar model of each bone and information as to where in the model the reference point is.

In the simplest form, there is a separate exemplar sub-model for each clinical reference point. However, how many clinical reference points fall into multiple segments of a specific bone depending on both bone morphology and the location, type and degree of bone pathology.

Coarse zoning (described in more detail below) of the bone 3D anatomical model is carried out using obvious anatomical landmarks, such as the eye sockets and the bridge of the nose for the skull. Data as bone pathology localization, type, and degree can be used to personalize 3D anatomical model zoning and to serve as parameters for the Coarse Zoning Algorithm (CZA).

Each 3D exemplar sub-model represents a Hierarchical Geometric Model (HGM) of the region of the bone around a particular reference point and provides a way to represent and define a clinical reference point. The HGM provides a set of geometric constraints on a patient-specific 3D anatomical model to reliably and repeatably identify parts and features of the bone and allows the prioritization of constraints and the expression of constraints that must hold sim ultaneousl y.

Each HGM is composed of positive and negative primitive volumes with specific parameters. Basic volumes include ellipsoids and extrusions of ellipses (i.e., cylinders with elliptical cross-sections). Spheres, planes and round cylinders are extreme instances of ellipsoids and extrusions. Each parameter of a volume has limits defining acceptable values of the parameter.

Ellipsoids and elliptical cylinders are used to represent convex and concave bone surfaces. These basic volumes cannot easily represent natural bone surfaces precisely but in a piecewise way can represent the major features of the bone surface in enough detail to enable matching to occur. The basic volumes in the HGM only need to capture sufficient detail to measure the geometric relationships between them and to verify that those geometric parameters comply with the model constraints, for example is the parameter within the upper and lower limit for that parameter in the HGM.

The natural surface of a bone can be quite complex and details in it will sometimes lead to a large number of matches with the basic volumes in the HGM. Constraints on matches and the geometric relationships between matched volumes are used to eliminate all but the highest quality of these matches. To disambiguate the multiple matches that might occur for a basic volume, intermediate points are defined and incorporated into a hierarchical model.

In the HGM for a particular reference point on a bone, each volume and each geometric relationship specifies a constraint that the 3D anatomical model of a bone must comply with in order to identify the clinical reference point. A parameterized geometric relationship between two HGM subsets corresponds to a defining constraint that the reference point must obey. The relationship and volume parameters allow the HGM to match the unique structure of the bone for a particular patient specific 3D anatomical model.

Each node in the HGM is a constraint on the geometric relationship between two sub-hierarchies. Two basic volumes can be combined by a constraint on the geometric relationship between them forming a 2nd level hierarchy. This can be combined with a basic volume or another hierarchy. The entire HGM model is built up iteratively in this way. Any path from a leaf to the root of the hierarchy is a sequence of constraints. All of these paths define the partial ordering on constraints. Constraints are applied from the bottom up but sibling constraints in the hierarchy can be applied in any order.

In order to determine clinical reference points, HMAs combine basic volumes of the HGM pairwise using set operations with parameterized geometric relationships including, but not limited to angular displacement and distance between the two volume operands in the set operation. Positive volumes match the inside surface of a bone and negative volumes match the outside surface of a bone, i.e., empty space not overlapping with the bone. For example, a negative ellipsoid of the correct size could match an eye socket. A positive ellipsoid with a high aspect ratio could match the bridge of the nose.

Constraints on the geometric relationships between basic volumes or sets of basic volumes provide the HMA with a way to eliminate poor matches between the HGM and a bone from the patient-specific 3D anatomical or bone model, that do not correspond to the human anatomy. They also provide a way to parameterize the match between the HGM and the bone model and adjust for the individual differences of the last one.

At the bottom of the hierarchy the HMA many matches are usually found, but as the algorithm progresses upwards in the hierarchy, constraints fail and partial matches are discarded. Eliminating poor matches between the actual bone (from the patient-specific 3D anatomical model) and parts of the model reduce the amount of computation required to identify the clinical reference point that the HGM defines. The value of a parameter of the match, e.g., the distance between two basic volumes, is used to adjust constraints on the matching steps in the rest of the HGM. Upper and lower limits of match parameters can be adjusted by the HMA to minimize false positives and false negatives. Ideally there will be one (or few) candidate matches when all the constraints in the hierarchy have been applied.

Optimization can enable exemplar models for two or more clinical reference points to share constraints and reduce computation. Constraints include space in which part of the bone must fill and in which there must be a void. These basic volume constraints provide a set of candidate interpretations of the parts of the bone model. For example, a particular void in the skull might represent an eye socket, but there might be several other parts of the skull that might also have this interpretation. In other words, the basic volume for the eye socket might have good or poor matches with several concave surface elements of the patient-specific 3D anatomical model. Later exemplar model constraints are required to determine which match (if any) of a basic volume to a part of the patient-specific 3D anatomical model is the best match. In this way constraints represent a set of choices or decisions (e.g., "this surface element of the patient-specific 3D anatomical model is (or is not) a good match for the left eye socket in the exemplar model") that occur in partial order.

Matching a basic volume to a surface of the patient-specific 3D anatomical model of the bone by an HMA requires that the volume be maximally inserted into a concave patch of the bone model. In the case of the eye socket, the basic volume is sized in such a way to allow it to be maximally inserted into the void in the patient-specific 3D anatomical model that corresponds to the actual eye socket. This is similar to a maximization process through convolution. Instances of the basic volume with multiple sizes is used in the HMA to traverse the patient-specific 3D anatomical model of a bone to find the best fit.

Two constraints can be independent of one another and decisions about whether matches satisfying either can be made by HMA in any order. Together the sequential decisions and the independent decisions about whether constraints are satisfied form a partial order or hierarchy of decisions in the matching process.

Geometric constraints on the pose of a basic volume (or set of basic volumes) relative to another basic volume (or set of volumes) of the HGM may include distance between landmarks like centroids and angular displacements between local coordinate displacements. Upper and lower thresholds on parameters for these relative coordinates are used by the HMA to eliminate constraint matches that do not correspond to human skeletal anatomy. In addition, quality metrics for constraint matches can be extracted from a patient-specific 3D bone anatomical models stored in the clinical database. For example, the ratio of the interocular distance and a basic size measure of the skull may have a particular frequency distribution in the clinical database. The cases lying in the interval between two particular percentiles might be considered a requirement for a high-quality match for the basic volumes representing the eye sockets.

In general, the HMA matching procedure maintains several candidates matches for each constraint in the exemplar model until enough information is available to discount all but the correct match. A Dynamic Programming (DP) method may be used as part of HMA to manage all of the candidate matches as an optimization procedure until a final best match for the entire exemplar model is obtained. The optimization works by decomposing an individual problem into a plurality of subproblems to be solved recursively. The HMA keeps track of the candidate subproblem solutions and combines them to obtain one or more solutions to the original problem. The algorithm may also optimize sequential choices within a hierarchy. Each subtree within the hierarchy defines a subproblem and a set of candidate solutions. The HMA can use the best subproblem solutions to construct candidate solutions to the problem defined at the next higher level in the hierarchy.

Limits or conditions on match parameters (e.g., the ratio of the interocular distance to skull size) can be used to define whether the matching process will carry a match further in the process. The match itself, however, provides a specific value of the interocular distance for the patient-specific 3D anatomical model of the bone being matched. For the final best match of the HGM representing 3D exemplar model to the patient-specific 3D anatomical model of the bone, the computer system based on the method can read off all the values of these geometric parameters. Among these parameters will be the position in the bone model of the desired reference point. Reference points are defined in terms of the local coordinate systems for the constraints in the best match.

When clinical reference points are determined in pathology-affected 3D bone model segments, in parallel with the HGM, a corresponding base pathology model is used by the HMA to search for these points. The pathology base model is the parametrized one and is adjustable to the localization, type and degree of a pathology.

The pathology base model does not replace the HGM but rather optimizes the matching process by providing information as to the kind of deviations from the norm that are expected. In this context, the pathology base model essentially parameterizes the HMA algorithm. For example, in case of the pathology of a lower jaw protrusion, some of the clinical reference points (e.g. Pogonion, Menton, Gnathion) are protruded in comparison with the other ones (e.g. Nasion, Anterior nasal spine) and in respect to cephalometric norms.

In addition to the HMA algorithms, representing a traditional non-AI approach to the determination of skeletal reference points on patient-specific 3D anatomical model, the method also includes machine-learning CNNs algorithms, which are responsible for automatic evaluation of the accuracy of the clinical reference points determined using HMA algorithms, their automatic fine-tuning (if necessary) and for data validation.

The CNNs algorithm can be arranged to perform practically the same task as the HMA algorithms, i.e. to determine clinical reference points. However, additional data is used to train the CNNs algorithm, such as clinical reference points that have been manually or automatically determined using the HMA algorithm(s) and then validated by an expert. If the anthropometric (cephalometric) data values determined by the CNNs algorithm differ from the ones identified using the 3D geometry-based approach, but these differences do not exceed the acceptable limits, the data values determined by the CNNs can be considered correctly defined data and this is equivalent to their automatic validation. At higher than the specified tolerances, the data can be transferred to the expert for manual evaluation. This usually occurs only in case of severe and rare clinical pathologies. Expert-validated 3D bone models with determined clinical reference points together with related clinical information are subsequently used to re-train the CNNs algorithm and update the clinical pathologies base models.

The input data used by the CNNs algorithm is very specific to human anatomy. The input encoding of the patient-specific 3D anatomical models is generated as result of the fine segmentation of a patient-specific 3D bone model and is represented by a scene graph: a rooted tree, where nodes are segments of a triangle or quadrilateral mesh representing the regions of the bone around a reference point with geometric features and labelled clinical reference point, and each edge indicates that segment is a child. The scene graph structure follows the exemplar model of the corresponding human skeleton element. The encoding also uses parent-child relationships to constrain segmentation. After the CNNs training stage these relationships are converted to a deterministic canonical hierarchy over all of the exemplar 3D anatomical model.

This enables the CNNs algorithm to learn features of a 3D bone model for the purpose of clinical reference points determination from the compact encoding of the input data while preserving important properties of the 3D input data like locality, isotropism and scale invariance. On the other hand, the input also encompass anisotropic types of data, including, but not limited to, orthographic projections of the 3D model, and parametrized descriptions of clinical pathology.

A ML CNNs algorithm is built as a set of multilayer neural networks: the input layer, many internal layers with an immense, high dimensional weight space to be trained to determine clinical reference points, and the output layer. The many internal layers allow a deep neural network to carry out more powerful and complex computations which are required to process 3D organic shapes and volume data. The output information is the reference point cloud, that is used in further pre-surgical planning as well as certain derivative data (for example, coordinates of determined clinical reference points as well as comparative data from clinical reference points determined using HMA algorithms and CNNs algorithm) that are used to evaluate and refine the precision of the method.

The CNNs algorithm is trained in multi-stage fashion. By its nature CNNs algorithms enable the training procedure to extract all the required information about solving the problem of interest without requiring the development team provide any information other than many example problem/solution pairs.

Many of the defining characteristics of clinical reference points are properties of a contiguous 3D coordinate system in the data encoding of a patient-specific 3D bone model. This means that, under very weak assumptions, all computations are linear in the number of representational elements, i.e. the computations are proportional to the number of vertices, edges, polygons and voxels / polyhedrons. In other words, the adoption of the CNNs approach implicitly asserts that the clinical reference points are determined by a linear combination of 3D convolutions of the 3D bone model. The convolutions or filters that the CNNs are composed of are passed over the input space and discover surface and volume properties that define a clinical reference point. This enables them to find a solution in a reasonable amount of time and expense (computational power).

Domain specific knowledge allows for constraints to be exploited in solving recognition and classification problems. The exemplar models used as part of this method identify key configuration parameters or inputs of the CNNs algorithm as well as their interdependence, and optimize each one as well as combinations of them. This enables use of extra filters that are passed uniformly over the input space in order to reduce the total computational effort of training and inference.

On the other hand, the algorithm is able to extract not just invariant volumes and surface properties of the 3D bone model data, but to extract one or more features at a time. As features (and detectors for those features) are learned, they are incorporated into the network.

Essentially the feature detectors provide higher level input from which to extract additional invariants. The original input is also available so nothing, in principle, is lost. After enough features of a triangle or quadrilateral mesh representing the regions of the bone around a reference point have been learned, the output space of the trained deep CNNs encodes critical properties of the problem of interest and in a final training stage the network learns how to determine clinical reference points. That is, the network learns how to transform the input problem represented as a collection of higher level features into the solution of the problem.

When training the ML CNNs algorithm to determine clinical reference points, the accuracy of the algorithm largely depends on the number of examples of problem / solution pairs required for training. Although having a large number of examples of problem / solution pairs using CNNs does not require any additional bone structure or other clinical information, adding the third dimension to the convolution/filter processing makes the method more computationally expensive. The method of the embodiments below utilizes fine zoning of human skeletal structures into distinct segments of bone structures to narrow the search field around established clinical reference points and to distinguish pathology-affected and pathology-free patient-specific segments of 3D anatomical models and thereby increase the number of examples of such pairs.

As part of the method of some of the embodiments below, the problem / solution pairs consist of the two structured 3D anatomical models from the clinical database belonging to the same patient: clinical reference points determined by HMA algorithms (problem) and the ones verified, refined (if applicable) and validated by the expert(s) during pre-surgical planning (solution). This approach enables the method to use 3D geometry detectors applied in HMA algorithms for feature identification and their incorporation into CNN. In alternative, more classical, embodiments of the method, only 3D bone models with determined and validated clinical reference points are used, together with bone-specific exemplar models for the training data augmentation.

No one problem is similar to another and there is no one Neural Network (NN) that can solve them all. This is why the CNNs algorithm, used in the method of the embodiments below, is designed in complex way by combining and customizing different architectures already used in 3D and point cloud projects. The algorithm can also apply hybrid schemes, including handcrafted features.

Although many times in the literature, NNs based on learned features outperformed manually constructed features, the handcrafted features used in the methods of the embodiments below, provide both a head start and early improvement over the cases in which the CNNs has to learn everything from scratch. Therefore, the algorithm uses a parametrized exemplar model with hierarchical bone zoning map and clinical reference points established within healthy norms, as well as clinical pathology base models as additional information, describing anthropometric peculiarities and the expression of a different pathologies in the 3D anatomical model to manage the issue and to ensure the system is trained with less clinical data as well.

The algorithm can also support inter-reduction of encodings: bone tissues are highly structured, point clouds are isotropic, but projections and volumetric encodings are not and may benefit from specific transformations. Not all the features important for clinical reference point identification are properties of contiguous input regions. These kinds of features are affected by subsampling (e.g., max pooling), which is used to accelerate identification of clinical reference points as well. Whereas subsampling steps may interfere with the detection of certain more complicated kinds of geometric relationships that the CNNs algorithm deals with, the method includes above mentioned exemplar models to ensure, that subsampling does not reduce performance of clinical reference point identification.

### 3D reconstruction function

As a basis for the operation of the system, a DICOM standard radiological (or other imaging) examination file is submitted to the system. This may be transferred in any known manner, in particular by uploading the file to the system. In some embodiments, the imaging file may be directly submitted from the imaging apparatus or associated software after the imaging has been completed. In other arrangements the provision of the imaging data may be carried out separately, for example, after initial analysis and review by a medical professional.

The system automatically produces a three-dimensional (3D) anatomical model from the images by performing an automatic 3D reconstruction. This reconstruction is carried out in two stages. In the first stage, 3D reconstruction is performed by directly segmenting multi-layer radiographic examination data, such as computed tomography (CT) images, and combining them into a solid 3D model. This is preferably done by using an analytical image reconstruction filtered-back projection (FBP) algorithm and an FDK cone-beam reconstruction algorithm.

This 3D model is often inaccurate, may have many artefacts, and sometimes does not separate individual anatomical structures. Therefore, in the second stage, after performing the automatic reconstruction of the 3D digitalized patient's anatomical model, the quality (including accuracy) of the patient's 3D anatomical model reconstruction is evaluated and, if necessary, the 3D anatomical model correction and validation steps are performed.

The actions are performed in the second stage and who performs them depends on the maturity phase of the system.

During an initial training phase, the result of the automatic 3D reconstruction of the radiological images is verified and manually adjusted by an expert (e.g. a radiological imaging specialist from the system support team). The specialist also validates the accuracy of the 3D anatomical model after checking and adjusting the 3D anatomical model as needed. After 3D anatomical model validation, the expert also manually marks clinical reference points on a virtual patient-specific 3D anatomical model, which forms the basis for structuring information describing the 3D anatomical model and, in some embodiments, for the zoning (segmentation) of the model. This data is also used later for the initial training of the system to process automatic evaluation of the accuracy of the clinical reference points determined using the HMA algorithms, their automatic fine-tuning (if necessary) and the data validation and other embodiments, as described further below.

Once the system has completed the initial training phase of the 3D reconstruction function and reached a maturity phase, the artefacts of the automatic 3D reconstruction are removed and the accuracy of the 3D anatomical model produced from the image data is validated automatically. This process uses a machine learning (ML) algorithm using convolutional neural networks (CNNs). If the system encounters atypical artefacts, the system will automatically notify the expert (preferably from the system support team) and the 3D model can be further verified and validated manually.

In doing so, the system is arranged to automatically identify and remove automated 3D reconstruction artefacts using of one or more of the following approaches.

### Use of mathematical methods to describe morphology of the human anatomical structures

Although each person's skeleton (bones, joints) and other anatomical structures are different, they are all formed by the prototype of a well-established human anatomy and its individual elements. The exceptions are congenital or acquired pathologies, but even these are usually not far from this prototype. Therefore, parametrized mathematical models of individual human skeletal (or other anatomical structure) segments and their connections allow for the automatic generation of 3D anatomical surface patterns in areas of the 3D model that are heavily affected by artefacts or difficult to distinguish from other objects. Parametrisation is performed with respect to the appropriate measurements, proportions, distances, and positions of individual anatomical elements between individual clinical reference points, in combination with mathematical methods for interpolation and extrapolation of 3D surfaces.

### Linking the formalized (structured) description of clinical pathology to the pathology base models

The application of parametrized mathematical models in the removal of automatic 3D reconstruction artefacts and in the delineation of three-dimensional surfaces is complicated by congenital or acquired pathologies of human skeletal elements. The system uses a parametrized description of clinical pathology and its localization provided by the surgeon during each pre-surgical planning session to select best fitting pathology base model, which navigates the 3D reconstruction subsystem through pathology-affected segments of the 3D patient-specific anatomical model. In addition, the system activates other mechanisms that eliminate automated 3D reconstruction artefacts and fine-tune the boundaries of three-dimensional surfaces.

### Use of historical data to realize machine-learning functionality in controlling the accuracy of automatic 3D reconstruction

The system uses a ML CNNs algorithm for the final identification and removal of remaining artefacts generated as the result of automatic 3D reconstruction. Algorithm training is done by comparison of problem/solution pairs: from one side the historical data obtained from the automatic 3D reconstruction (3D anatomical models with artefacts), from the other refined and validated 3D anatomical model data stored in the system (in its clinical database).

All validated 3D anatomical models are structured in two ways: in the first way zoning of patient-specific 3D anatomical models is based on a scalable exemplar model of the relevant human skeleton part, parametrized clinical pathology information and anatomical landmarks such as eye sockets; in the second way 3D model structuring is based on the determined clinical reference points. The accuracy of their coordinates is validated during the previous pre-surgical planning sessions done using the system. Meanwhile 3D anatomical models with artefacts are structured only in the first way.

For comparison purposes, the filters in the CNNs are passed over the input space and discover the 3D model surface and volume properties that define boundaries of the model. In doing so, the system, based on the validated historical data of the 3D anatomical models accumulated in the clinical base, positions these models' clinical reference points to segments of this model obtained by zoning the 3D anatomical model in the first way. By further matching the corresponding segments of the validated 3D anatomical model with the corresponding segments of the same 3D anatomical model with artefacts, the clinical reference points are transferred to the 3D anatomical model with artefacts. This means that the zoning of 3D anatomical models in the first way serves as a common denominator by comparing 3D anatomical models (with artefacts) with their validated counterparts.

For comparison purposes control measurements of 2D slices of the auto-reconstructed 3D anatomical model (with artefacts) and measurements of its validated counterpart from the clinical database are performed and matched with the corresponding measurements in DICOM files of radiological images. The algorithm is further arranged to systematize identified discrepancies by identifying prognostic features, evaluate their regularity, and automatically generate prognostic patterns of discrepancies based on the clinical indications that characterize the pathology. This enables the system to be trained how to identify discrepancies between an automatically generated 3D model and its primary data source, the DICOM file.

Scaling and parametrization of the 3D anatomical models is also used in the convolution operations, which is part of the ML CNNs algorithm, for the identification of correlations. As well as extra data for processing pathology-affected zones of 3D anatomical model including historic parametric information about clinical pathologies entered into the system by its users (e.g. surgeons), relating the clinical case to corresponding pathology base model and information about the expression of the pathologies in the patient-specific 3D anatomical model (coordinates of clinical reference points in the pathology area, anthropometric (cephalometric) measurements between individual clinical reference points, additional clinical landmarks characterizing the pathology and marked on 3D anatomical models during the pre-surgical planning procedure). Linking the parametric description of clinical pathology to its expression in the form of a 3D anatomical model (not just to pathology base models) is available only after completing the entire pre-surgical planning cycle (and only for clinical cases accumulated in the clinical database).

As a result, the ML CNNs algorithm responsible for the final identification and removal of remaining artefacts learns to recognize human skeletal structure elements within 3D model zones (segments) and is thus trained to automatically remove remaining artefacts within individual zones of the 3D model, and / or separate individual anatomical structures. If historical data is insufficient, other approaches are applied or the system will automatically notify the expert about the atypical case and the 3D model will be further verified and validated by an expert (e.g. a radiological imaging specialist).

### Clinical reference points determination function with self-learning functionality

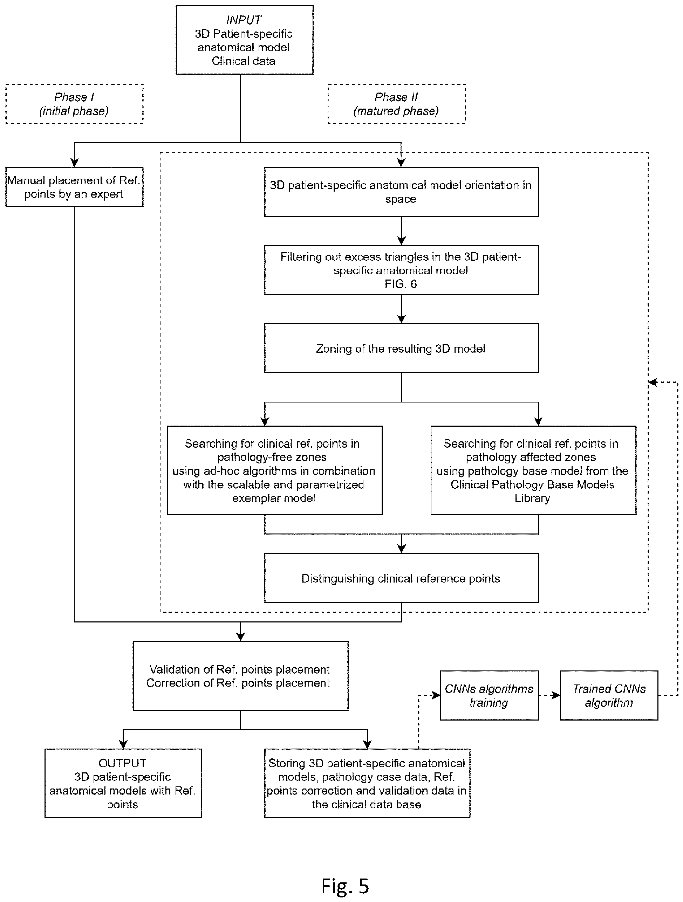

Once a 3D anatomical model has been generated and validated (manually or automatically), this module of the system automatically maps clinical reference points (clinical landmarks) to the anatomical model. An outline of the steps in a process of mapping clinical reference points according to an embodiment of the invention is shown in Fig. 5 and explained in detail below.

The clinical reference points determination ML CNNs algorithm includes the following steps. However, it will be appreciated that in other embodiments, the method may include different combinations of varying numbers of these steps.
1. 3D patient-specific anatomical model orientation in space;
2. Filtering out excess triangles in the 3D model;
3. Coarse zoning of the resulting 3D model, identification of pathology-free and pathology-affected zones;
4. Searching for clinical reference points in pathology-free zones using HMA algorithms in combination with the scalable and parametrized exemplar model with clinical reference points within healthy norms, which is automatically adjusted to include new clinical case data stored in the clinical database using the CNNs algorithm when a sufficient number of new validated clinical cases are included into the clinical database;
5. Searching for clinical reference points in pathology-affected 3D model zones using a pathology base model from the library of clinical pathology models, which is automatically selected using parametrized pathology description provided by system user, which describes localization of pathology and its kind, and is automatically adjusted to include new pathology case data stored in the clinical database using the CNNs algorithm when a sufficient number of new clinical cases with specific pathology are included into the clinical database;
6. Merging pathology-free and pathology-affected segments of patient-specific 3D anatomical model with determined clinical reference points;
7. Fine zoning (structuring) the patient's 3D anatomical-clinical data to make it suitable for the training of the CNNs algorithm in order to provide for automatic evaluation of the accuracy of the clinical reference points determined.
8. Validation / refinement of clinical reference points positioning using the CNNs algorithm. Training of the CNNs algorithm arises when enough examples have been accumulated demonstrating the differences between the results obtained through the HMA algorithms (dedicated to determine clinical reference points) and expert-validated analogous data;
9. Updating the clinical database with new validated clinical case data;
10. Updating of scalable parametrized reference models and clinical pathology base models used in the search of clinical reference points by new clinical case data stored in clinical database of the computer system using the CNNs algorithm (including linking of clinical reference points in pathology-affected 3D anatomical model zones with pathology base models of the respective pathology) each time when sufficient number of new clinical cases are included into the clinical database.

### Pre- processing steps: Orientation and Filtering Excess Triangles

### Orientation

The radiological images which provide the input to the system are obtained from CT / MRI or similar modalities, so the reconstructed patient-specific anatomical model is considered to be purposefully oriented in a space. During reconstruction, the coordinates of the object are not changed, thus maintaining the position of the anatomical unit (skull, chest, pelvic bones, etc.) as it was during the radiological examination. An inconsistent lying position may result in a deviation of up to 10 degrees, which is considered to be tolerable and appropriate to continue the process.

The orientation of the patient-specific 3D anatomical model in space is verified by expanding the sphere from the centre of the anatomical model, which estimates the number of points that fall into certain areas and creates a spatial angle based on arithmetic averages of those areas, providing information on the position of the anatomical model in space. Comparison of this data with the ideal position of the reference object (for example, the skull) data set adjusts the position of the model.

In most cases, the primary corrections are sufficient to position the anatomical model within tolerable limits. In the case of very large deviations, or extremely severe deformities related to existing patient pathologies that cannot be corrected by the system, the system informs the user (e.g. clinical engineer) of the need for manual adjustment of the model position in the space.

### Filtering Excess Triangles (Reduction)

In this step the initial 3D anatomical model is "reduced" by filtering out excess triangles. Going through 3D model triangles determines the angles of the normal triangle directions with the vector passing from the centre of the model to the middle of the triangles. The model is thus divided into two types of areas (where that angle does not exceed pi /2 and where it otherwise exceeds). Assuming that all received areas are undirected, only the area corresponding to the outside of the model is required.

Removing all other areas results in filtering, i.e. most triangles, including the inside of the anatomical model and other noise points, are removed. The "lighter" model has much less redundant information, which results in much faster system performance and faster computing.

### Clinical reference points determination steps

Each element of the human skeleton has its own unique clinical reference points, which are the basics for the structuring of 3D patient-specific clinical anatomical models and on which pre-surgical planning is based. Once the anatomical datum has been determined, the system is arranged to automatically perform anthropometric (cephalometric in case of a skull) measurements, detect deviations from normal values, determine axes, planes, calculate angles, and so on. In the system of the present embodiment, there are two stages to this process.

### Coarse zoning of the Model

The method of determining clinical reference points include a step of zoning (segmentation) of the 3D bone model (in some embodiments in partly overlapping segments). The method uses two modes of zoning: a Coarse Zoning Mode (CZM), which is based on easily identifiable anatomical human bone tags, such as the eye sockets or the bridge of the nose in a skull case, and a Fine Segmentation Mode (FSM), which additionally utilizes clinical reference points determined by HMA algorithms and validated by an expert during the process of 3D pre-surgical planning.

Coarse zoning is used as a preparatory step for determining clinical reference points using HMA algorithms. It zones the 3D anatomical model in relatively big zones and does not capture the fine-grained, hierarchical structure of human bones. In contrast, fine zoning can access the full semantics of human bone morphology and provide a simultaneous hierarchical shape structure decomposition based on determined clinical reference points of a bone model. It can be used both for training the CNNs algorithm and for validating clinical reference points using that algorithm.

With an oriented current case patient-specific 3D anatomical model as an input data, the CZA algorithm is used for the coarse zoning of the 3D anatomical model (in some embodiments to a partly overlapping bone segments).

Coarse zoning is primarily used to localize clinical reference points within sub-exemplar models represented by HGM models of the region of the bone around a reference point (or group of points) and to separate pathology-affected 3D model zones from pathology-free zones. Separation is necessary in case of pathologies altering bone morphology (e.g. in case of jaw deformities), as base models of clinical pathologies are additionally used to determine clinical reference points in pathology-affected areas of the 3D model. Zoning enable the association of pathology-affected areas of a 3D bone model with the corresponding clinical pathology base model.

The Coarse Zoning Algorithm (CZA) includes, but is not limited to, identification of anatomical landmarks, segmentation of the bone model, and merging of pathology-affected segments. The objective function of the method is to narrow down the possible localization of clinical reference points (and in this way to optimize computing resources used by the HMA algorithms) and to maximise the accuracy of the separation of bone segments affected by pathology from the remainder of the bone within the natural limitations established (i.e. short parametric description of clinical pathology and limited number of easy to detect anatomical landmarks).

The procedure for determining anatomical landmarks in the CZA algorithm falls in the same family of HMA algorithms as the ones used for clinical reference point determination described above and is based on one or more 3D exemplar models representing the HGM of the entire bone. Zoning utilizes a parametric feature-based approach and is carried out by establishing clinical reference planes which are predetermined by the exemplar model of the bone while parametrization of the zoning procedure is based on determined anatomical landmarks. Meanwhile the merger of pathology-affected segments is based on the parameterized information entered into the system (usually by the surgeon), which includes, but is not limited to, pathology type, its nature, degree and localization.

In some embodiments coarse zoning is a multi-stage process and is repeated if there is more than one clinical reference point in any established zone of the bone, accompanied by obvious, easily identifiable anatomical features, that can be used for sub-zoning. In some embodiments zoning is accomplished by combining individual bone segments obtained using different reference planes.

Zoning allows the association of pathology-affected zones of 3D bone model with the corresponding clinical pathology base model stored in the library of these models. The clinical pathology base model is parametrized by pathology type, degree and location, and for the purpose of this method is a set of geometric constrains on a patient-specific 3D anatomical model, which includes, but is not limited to, deviations of anthropometric measurements from healthy norms (taking into account gender, age and anthropologic origin of the patient), degree of bone maturation, bone loss, the size of the bone tumour and its focal point, etc.

### Searching for clinical reference points in pathology-free zones

For the search of clinical reference points in pathology-free zones bone-specific HMA algorithms are used. In the simplest form, there is a separate exemplar sub-model, represented by HGM, for each clinical reference point. However, how many clinical reference points fall into one or another segment of a specific bone model after initial zoning of the one depends on both bone morphology and the location, type and degree of bone pathology.

As described above, an HGM provides a set of geometric constraints on a patient-specific 3D bone model to reliably and repeatably identify parts and features of the bone and allows the prioritization of constraints and the expression of constraints that must hold simultaneously. Each HGM is composed of positive and negative primitive volumes with specific parameters. Basic volumes include ellipsoids and extrusions of ellipses (i.e., cylinders with elliptical cross-sections). Each parameter of a volumes has limits defining acceptable values of the parameter.

The natural surface of a bone can be quite complex and the basic volumes cannot easily represent natural bone surfaces precisely. But in a piecewise way they can represent the major features of the bone surface in enough detail to enable matching to occur. Sometimes this can lead to a large number of matches with the basic volumes in the HGM. Constraints on matches and the geometric relationships between matched volumes are used to eliminate all but the highest quality of these matches.

Each node in the HGM is a constraint on the geometric relationship between two sub-hierarchies. Two basic volumes can be combined by a constraint on the geometric relationship between them forming a 2nd level hierarchy. This can be combined with a basic volume or another hierarchy. The entire HGM model is built up iteratively in this way. Any path from a leaf to the root of the hierarchy is a sequence of constraints. All the paths define the partial ordering on constraints. Constraints are applied from the bottom up but sibling constraints in the hierarchy can be applied in any order.

In order to determine clinical reference points, HMAs combine basic volumes of the HGM pairwise using set operations with parameterized geometric relationships including, but not limited to angular displacement and distance between the two volume operands in the set operation. Positive volumes match the inside surface of a bone and negative volumes match the outside surface of a bone, i.e., empty space not overlapping with the bone.

In general, the HMA matching procedure maintains several candidates matches for each constraint in the exemplar model until enough information is available to discount all but the correct match. Dynamic Programming is used as part of HMA to manage all candidate matches as an optimization procedure until a final best match for the entire exemplar model is obtained.

After localization of probable reference points, the HMA algorithm verifies the results for the completeness and to check their fit inside anthropometric norms. If all clinical reference points were placed successfully, system transfers the model and all clinical reference points for future validation in the pre-surgical planning phase, run by the system user.

If any of said verification steps fail, system determines that the current case anatomical model does not conform to "healthy human" norms, and deems reference point determination unsuccessful. Patient-specific 3D anatomical model with successfully determined points and marked failed ones is transferred to an expert for manual refinement.

### Searching for clinical reference points in pathology-affected zones

This step links the parametrized diagnostic description of clinical pathology to the expression of clinical pathology on 3D patient-specific anatomical model by selecting the pathology base model based on parameterized diagnostic clinical data.

Independently to processing of pathology-free segments of 3D patient-specific anatomical model, pathology-affected segments are processed as well using the same HMA algorithm(s). In the search for clinical reference points in pathology-affected bone model zones the system uses a specific pathology base model from the library of clinical pathology models. This specific pathology base model is automatically selected using the parametrized pathology description provided by the system user, which describes the localization of the pathology and its kind.

The pathology base model doesn't replace the HGM but rather optimizes the matching process providing information as to what kind of deviations from the norm are expected. In this context, the pathology base model parameterizes the HMA algorithm by providing information as to what deviations from the norm are expected in the search process. For example, some of the relevant points could be absent, or migrated to completely different places altogether. In case of pathology of a lower jaw protrusion some of the clinical reference points (e.g. Pogonion, Menton, Gnathion) are protruded in comparison with the other ones (e.g. Nasion, Anterior nasal spine) and in respect to cephalometric norms which in turn depends on the patient's gender, anthropological origin, and skull size.

### Merging pathology-free and pathology-affected segments of patient-specific 3D anatomical model with determined clinical reference points

During the initial phase of the functionality development, the coordinates of locally-determined clinical reference points are simply transferred to a patient-specific 3D bone model no matter what type of zoning was used (overlapping or not). If the coordinates of the same clinical reference points in the overlapping segments do not match, all will be transferred to the 3D anatomical model with a special notation for the expert(s) manual verification and validation during the pre-surgical planning process. These problem/solution pairs of determined clinical reference points are later used for the training of the CNNs algorithm. Once the training is complete and the system reaches maturity phase, the transfer of locally determined clinical reference points from overlapping segments of a patient-specific 3D anatomical model is processed automatically by the system itself.

### Fine zoning of the model

The objective function of the fine zoning method is structuring patients' 3D anatomical-clinical data to make it suitable for the training of the CNNs algorithm to provide automatic evaluation of the accuracy of the clinical reference points determined using the HMA algorithms, their automatic fine-tuning (if necessary) and data validation.

The Fine Segmentation Algorithm (FSA) provides a method for converting geometric shapes of a 3D bone model into hierarchically-segmented zones with zone labels based on already established and validated clinical reference points. The hierarchy for a single 3D model is represented by a scene graph. There is no need to analyse geometric patterns (such as shape, symmetry or connectivity relations) when performing fine zoning, in comparison with traditional Hierarchical Shape Segmentation and Labelling methods, as 3D anatomical models are already labelled and the hierarchy of each bone segmentation is pre-determined in the corresponding bone-specific exemplar model, represented by the HGM. Fine zoning is the key to structuring patients' 3D anatomical-clinical data and ensures full comparability of a patient-specific 3D anatomical model of the bone with historical clinical data.

Fine zoning of the 3D anatomical model is primarily intended to structure the 3D anatomical-clinical data for the purpose of a similar clinical cases search and 3D pre-surgical planning. However, when this zoning is used in conjunction with the HGM model of the region of the bone around a reference point to reduce the encoding of the input data (i.e. the 3D bone model), it simultaneously preserves important properties of the 3D input data like locality, isotropism and scale invariance. This enables the CNNs algorithm to use the hierarchically segmented and labelled data to learn features of 3D bone model for the purpose of clinical reference points determination from the compact encoding of important properties of the input data and to train bone-specific exemplar models.

The secondary use of the outcomes of fine zoning is not limited to the training of the CNNs algorithm and for validating clinical reference points using the trained one, but also to refine the expression of clinical pathology in 3D form when updating pathology base models. Fine zoning enables the comparison of any segment of the bone of the current clinical case with an analogous segment of a partitioned exemplar anatomical model, as well as with analogous segments of historical patient-specific 3D anatomical models stored in the clinical database.

This approach to 3D anatomical model zoning allows the closest matching model for a segment of 3D anatomical model to be found instead of looking for an exact match for the complete model, which possibly does not exist even in a very extensive clinical database.

### Validation/Refinement

Usually the HMA algorithms do their job well when the bone morphology conforms to generally accepted anthropometric norms. However, in the presence of bone and bone pathology such as bone tumours, excess bone tissue (impingement), bone voids and other defects, fractures or deformities, the HMA algorithms can be inaccurate or simply do not set individual clinical reference points. The greater the deviation from the generally-accepted anthropometric norms, the greater the deviation given by the HMA algorithms. Therefore, the first stage of automatic clinical reference points setting on a current case 3D anatomical model is followed by the second stage of further validation of the accuracy of the settings, coordinates correction (if needed) and validation. What actions are performed in the second stage and who performs them depends on the maturity phase of the system.

During the initial phase of the functionality development, the result of automatic determination of clinical reference points is verified and manually adjusted by an expert(s) during the pre-surgical planning process. The expert has the ability to correct the clinical reference points by moving them to the appropriate location. Validation of clinical reference points is a natural and indirect result of the pre-surgical planning process through the system.

A manual correction option is needed to form a high volume set of validated exemplar problem/solution pairs for the training of the CNNs algorithm. As part of this method each problem / solution pair consists of the two structured 3D anatomical models from the clinical database belonging to the same patient: clinical reference points determined by the HMA algorithm(s) (problem) and those verified, refined (if applicable) and validated by expert(s) during pre-surgical planning clinical reference points (solution).

Validated clinical reference points are the basis for structuring information describing the 3D anatomical model. This data is also used for the CNNs algorithm training to process automatic validation / refinement of clinical reference points positioning on a patient-specific 3D anatomical model. Once the training is complete and the system reaches maturity phase, the further accuracy of the clinical reference points is evaluated, corrected (if applicable) and validated by the system itself using the CNNs algorithm.

The CNNs algorithm performs practically the same task as the HMA algorithms, i.e. establishes clinical reference points. However, additional data is used to train the CNNs algorithm: e.g.-clinical reference points that have been manually or automatically determined using the HMA algorithms and then validated by an expert. If the anthropometric (cephalometric) data values determined by the CNNs algorithm differ from the ones identified using the 3D geometry-based approach, but these differences do not exceed the acceptable limits, the data values determined by the CNNs are considered correctly defined data and this is equivalent to their automatic validation. At higher than the specified tolerances, the data is transferred to the expert for manual evaluation. This usually occurs only in case of severe and rare clinical pathologies. Expert-validated 3D bone models with determined clinical reference points together with related clinical information are subsequently used to re-train the CNNs algorithm and update clinical pathologies base models.

### Post-processing steps

### Complementing the clinical database with a new validated clinical case data

Once the 3D anatomical model has been structured, the structured case clinical data is transferred to the clinical database and made available to any user of the system for the clinical case of interest. These data become historical clinical data and continue to be used both for the CNNs algorithm training to develop the functionality of individual system modules, and for searching similar clinical cases in respect to the pathology expression in 3D bone model where certain uncertainties are encountered that cannot be solved by CNNs algorithms.

### Updating of scalable parametrized exemplar models

Scalable and parametrized exemplar models are automatically adjusted to a new clinical case data stored in the clinical database using the CNNs algorithm each time when a sufficient number of new validated clinical case data is included into the clinical database.

### Updating of parametrized clinical pathology base models

The parametrized clinical pathology base models link parameterized descriptions of clinical pathologies that a system user enters into the system at the start of pre-surgical planning of a new clinical case with the structured expression of this pathology in a 3D anatomical model. On the one hand, linking a clinical case to a specific base model of clinical pathology enables the use of this model to automate the process of 3D reconstruction of the patient's anatomical model and its structuring by determining the clinical reference system. On the other hand, by zoning patient-specific 3D anatomical model and localizing the pathology in a specific segment of this model, the clinical pathology base model is associated with a specific expression of this pathology in different clinical cases. The accumulated clinical case data, categorized by the pathologies to which they belong, is further used by the system to update clinical pathology models using the CNNs algorithm. This results in a closed loop where the generation of system training data takes place as the system is used in pre-surgical planning.

The coordinates of the clinical reference points on which the 3D anatomical model is structured, and on which the anthropometric measurements are based, are only one set of parameters of the clinical pathology model, which expresses deviations from the anthropometric norms. Other parameters are indirectly set by the system user during pre-surgical planning (for example, positioning the axes of the implant, bone resection lines, etc.). The system is used by the surgeon for pre-surgical planning, not for structuring clinical pathology. Therefore, some clinical pathology parameters are deduced indirectly from system user-defined parameters. For example, bone tumour size can be deduced from both clinical reference deviations and resection lines for tumour removal, or a combination of these and other measurements.

Clinical case pathology base models are automatically updated via the CNNs algorithm training each time when a sufficient number of new clinical cases with specific pathology are included into clinical database.

### Clinical database

The method and computer system for pre-surgical planning according to the present embodiments of the invention are based on 3D clinical data structuring, saving of the structured data in a clinical database and utilizing of this data both to find the closest historical clinical cases to a system user case and to train the system's CNNs algorithms to perform their assigned functions based on good clinical practice data.

The clinical database can store the following clinical information for each clinical case, including, but not limited to: parametrized clinical pathology information with contraindications to applicable treatment solutions; radiological images; structured 3D anatomical model information; structured 3D clinical case pathology information; 3D models of used implants, surgical guides, screws, and other components of implant kit with metadata, or metadata only; and data describing pre-surgical planning steps, including their order, axis alignments, angles measurements, resection lines, attachment points, etc.

The clinical database is updated after each pre-surgical planning session performed with the system. Data from each clinical case is collected in a set of interrelated records along with the metadata describing that set.

The closest historical clinical cases search to a system user case is executed on the basis of multi-parametric system user queries based on data entered into the system describing the system user case. In most cases, the search (basic search) is based on a parametrized description of clinical pathology. This requires neither a 3D anatomical model nor its structured embodiment with coordinates of clinical reference points. In case of advanced search structured 3D clinical data is used when looking for the closest clinical case based on the expression of the pathology in the patient-specific 3D anatomical model and the nature of the treatment decisions expressed in relation to the 3D anatomical model.

The clinical database search by the system user is an optional functionality. The system user can activate it at any stage of pre-surgical planning.

Meanwhile, the system's machine-learning, based on the CNNs algorithms, is automatically activated each time a threshold is exceeded, identifying a number of new clinical cases with predefined features. It is used for upgrading the automatic 3D reconstruction functionality, updating of the parametrized exemplar models used in the search of clinical reference points and in implant design generation, for the generation of new pre-surgical scripts, navigating system user through his own clinical case and some other embodiments.

The system, based on the clinical experience contained in the clinical database, allows the browsing of anonymous clinical cases and provides visualizations of various pathologies and treatment plans applied and, in this way, can help surgeons to make complex technical decisions by providing examples and suggesting the most medically correct path. As such the system greatly facilitates the acquisition of knowledge by surgeons and medical students in pre-surgical planning and implantation, helps to raise the qualification of medical staff and avoids the risks arising from ignorance or inexperience. That in turn can enable faster and more reliable input from a surgeon which is crucial for implant design.

### Library of standard implants, screws and other standard components

The system includes a library of standard implants. This library includes, but is not limited to: 3D models of standard implants, screws, other standard components, used together with implants, their metadata, etc.

The system user can form multi-parametric queries for searching standard implants in the library directly on the patient's 3D anatomical model in standard implant selection mode, marking the intended implant positioning relative to the bone. They can also use key queries to specify the manufacturer of the implant, the model of the implant, and the values of the individual parameters (metadata) that characterize the implant. The system selects the 3D models of one or more implants that best fit the system's user specifications, and the user can upload them to the pre-surgical planning virtual space and position them relative to the patient-specific 3D anatomical model.

### Library of exemplar and pathology base models

For the 3D reconstruction and determination of clinical reference points on 3D anatomical models, the system uses a number of exemplar models, as a set of geometric constrains, describing the prototype of a well-established human anatomy and its individual elements (skull, other bones, joints), their clinical reference points within the healthy norm as well as deviations from the healthy norm that are characteristic to individual human skeletal element pathologies in their expression in 3D anatomical model (the human skeleton system's congenital and acquired pathologies). These exemplar models are scalable and parametrized. In addition, the scalability and parametrization possibilities are periodically updated, when new clinical cases with significant features are added to the clinical database, and the number of such new clinical cases reaches certain threshold values.

Each validated patient-specific 3D anatomical model stored in the clinical database is represented in different encodings: as 3D (CAD) file, including but not limited to STL, OBJ, FBX formats; as list of clinical reference points with their coordinates; zoning maps, etc. Based on this information, the deviation of the model is calculated in respect to the exemplar models used by the system. Pathology-free segments of patient-specific 3D anatomical model are compared in respect of the scalable and parametrized mathematical exemplar model, that have all anatomical reference points within healthy norms. Pathology-affected segments are compared with historical clinical data stored in clinical database, related with the same clinical pathology base model applied to identical localization. Comparison of validated 3D patient-specific anatomical models captured on clinical database in respect to exemplar and pathology base models is performed by measuring distances between individual clinical reference points, evaluating their positioning in space relative to each other, calculating sizes and proportions of respective objects, etc.

The list of clinical pathology base models used by the system is not exhaustive and is constantly updated. When a user of the system enters a description of a pathology that is unknown to the system, the system does not find a base model corresponding to that description. Therefore, the validation of the automatically-generated patient-specific 3D anatomical model and the clinical reference points on it is referred to an expert. Having determined that a given clinical case does not correspond to any reference system pathology model, the expert manually creates a new pathology base model using special system instruments and adds it to the library of pathology base models.

Most of the pathologies found in bones are usually expressed visually by some kind of deformity or abnormality. Those deformities and/or abnormalities could be measured using anthropometric measurements. Each anatomical structure has its own set of clinical reference points that are used for said anthropometric measurements. As an example, in a healthy human skull all of clinical reference points have their own localization and all of anthropometric measurements calculations by using those points are within healthy human norms. If this skull is compared with a pathology-affected skull (for example - lower jaw protrusion), most of the skull clinical reference points will be find within healthy norm, except the ones which are located on the lower jaw.

Migration of clinical reference points outside the healthy norm (as reflected in their underlying anthropometric (in the case of the skull, cephalometric) measurements), clearly indicates abnormality in lower jaw and directly associates expression of this abnormality in the 3D anatomical model with lower jaw protrusion pathology. In cases of this pathology it becomes normal to find specific clinical reference points in unusual locations, in comparison to a healthy human skull. Therefore, when the system user submits a diagnosis of "lower jaw protrusion", the system will select the appropriate pathology base model and unusual placement of the clinical reference points of some skull 3D anatomical model segments will be considered standard, basic, or even "normal".

There are hundreds of different pathologies that have some sort of visible deformities or abnormalities resulting in clinical reference points migration from the healthy norm. For each known pathology a corresponding pathology base model is created in the system. These models are accumulated in the Library of exemplar and pathology base models. Each clinical pathology base model is parametrized by pathology location, type and degree, anthropometric measurement deviations from healthy norms, as well as other parameters that characterize pathology-specific abnormalities such as the degree of bone maturation, the size of the bone tumour and its focal point, and other parameters (for example, acetabular bone loss can be parametrized by using Paprosky classification). However, even parameterized pathology models do not describe all their variations. Therefore, the system uses the CNNs algorithm to perform deeper parameterization of clinical pathology models using historical clinical case data stored in a clinical database.

Clinical pathology base models in some embodiments of the present method are used for a targeted selection of comparative historical data from the clinical database used for matching with the corresponding segment of patient-specific anatomical model under processing.

### User navigation through pre-surgical planning process

As shown in Fig. 1, the system user is free to choose the system modules with which he wants to perform pre-surgical planning. This can include:
a) searching for similar clinical cases in the clinical database and uploading individual historical clinical data into a virtual 3D workspace;
b) pre-surgical planning with standard implants, whose 3D models and their metadata are stored in the library of standard implants;
c) pre-surgical planning with patient-specific implants, including specification of requirements for a made-to-order product;
d) pre-surgical planning with patient-specific surgical guides, including specification of requirements for made-to-order products;
e) pre-surgical planning with patient-specific implants, or with patient-specific implants and surgical guides, or with standard implants and surgical guides, or only with surgical guides, by modelling the design and compatibility of these products in the phase of pre-surgical planning with 3D models of these medical devices.

The system provides user navigation while working in the functional modules b) - e) above.

User navigation is performed according to multi-parameter navigation protocols, which are self-adjusting to a specific clinical case. Navigation is designed to ensure that all possible aspects of pre-surgical planning are taken into account and that the designed tool will be used appropriately during surgery and in the further recovery of the patient.

However, the navigation protocols that are an integral part of the system do not cover the full variety of clinical cases and the specifics of their surgical treatment especially when patient-specific implants or standalone patient-specific surgical guides are used. If the system determines that, due to the specificity of the clinical pathology, it cannot offer a comprehensive pre-surgical navigation protocol for this case, it informs the system user. The system also provides the system user with the option to move through the pre-surgical planning process in his own way, selecting the functions they require using icons or from menu system in a user-selected order. Special instrumental tools, that enable the system user to supplement an existing protocol or formulate a new pre-surgical planning navigation protocol and associate it with his specific clinical case are available as well. However, for this protocol to be parameterized and included in the system-supported set of navigation protocols, it must be reviewed by an expert from the system support team.

The process for pre-surgical planning using a standard implant is set out in outline in Fig. 3, which also illustrates the steps that are performed by the surgeon, the system ("MICE") and the implant manufacturer. When planning the surgery with a standard implant from the Library of Standard Implants, the system navigates the user when making anthropometric measurements, setting biomechanical axis, establishing angles between different planes, marking resection lines, etc. In addition, the system assists in forming multi-parametric queries for searching standard implants in the library of standard implants based on the information marked on the patient's 3D anatomical model in standard implant selection mode. The system also selects the 3D models of implants that best fit the system's user specifications, and the user can upload them to the pre-surgical planning 3D virtual workspace and manually position them relative to the 3D anatomical model. When a standard implant from the library is selected, future planning has to follow product-specific protocols established by product supplier.

If a surgeon is not satisfied with the results of pre-surgical planning using standard implants, he can proceed to the specification module for patient-specific implants. This model may also be the surgeon's first choice if he or she has from the beginning decided to use patient-specific implants to treat the patient. Additionally, the surgeon may decide to use the implant of his choice with patient-specific surgical guides. Then, in the next step, it moves on to the specification module for requirements for made-to-order surgical guides.

The process for pre-surgical planning including the design of patient-specific implants is set out in outline in Fig. 2, which also illustrates the steps that are performed by the surgeon, the system ("MICE") and the implant manufacturer. When surgical treatment with patient-specific implants is planned, the initial steps of pre-surgical planning, supported by user navigation, including anthropometric measurements, setting biomechanical axis, establishing angles between different planes, etc., overlap substantially with those of pre-surgical planning with standard implants. The differences start when it comes to making decisions about how to prepare an operable segment of the human skeletal system for implantation and for implant fixation to the bone. With patient-specific implants, bone preparation is not matched to the implant, as in case of standard implants, but the opposite. Therefore, for example, the selection of resection lines (where applicable) or bone position correction are guided by the patient's optimal solution rather than their compatibility with the standard implant form chosen.

By navigating the user through the patient-specific implant design requirements specification process in 3D virtual workspace using patient-specific 3D anatomical model, the system not only advises the user on the optimal sequence of specification steps, but also evaluates the validity of surgeon actions based on good surgical practice rules and sends relevant messages to the system user.

The system also provides active support for the system user by responding to his actions. For example, the system can perform bone resection after the surgeon marks the resection lines on the 3D anatomical model, or automatically generate a 3D model of the implant (e.g. joint implant, defect filling implant, etc.) after the surgeon marks the axes of the implant's position relative to the bone and its primary fixation points to the bone. Automatic generation of a 3D implant model is based on the information about the pathology, already entered to the system, associated with the corresponding pathology base model from the Library of exemplar and pathology base models and supported by the CNNs algorithm, trained on historical clinical case data, stored in the clinical database. The system provides full 3D visualization of these actions. For example, cut bone segments can be separated and reconnected by adjusting the position of the individual bone parts relative to each other.

The process for pre-surgical planning using a patient-specific surgical guides is set out in outline in Fig. 4, which also illustrates the steps that are performed by the surgeon, the system ("MICE") and the implant manufacturer. When the use of patient-specific surgical guides is planned, both as a standalone medical device and to use together with the standard or patient-specific implants, the system-provided algorithm for navigating the user through the process of setting technical requirements for these medical devices is quite close to pre-surgical planning using patient-specific implants, since both products are made-to-order. The principal technical solutions of automatic surgical guide generation is quite close to the ones, used in automatic generation of patient-specific implants design as well. For example, in case of resection guides, for the user of the system it is sufficient to mark on the 3D anatomical model patterns of the resection lines, bone surgical guide placement area, the anchor points (where applicable) and the insertion angle in respect to the bone.

The system user navigation algorithm to perform pre-surgical planning using surgical guides is parametrized based on whether the surgical guides will be used as a standalone medical device, or with standard implants or with patient-specific implants. In the latter case, the pre-surgical planning process for surgical guides and patient-specific implants can be integrated into one. The navigation algorithm is also parameterized according to the clinical purpose of the product (resection guides, drilling guides, repositioning guides, etc.) and localization of clinical application (in joint replacement, going deeper into specific joint, cranial surgery, spinal surgery, reconstruction surgery, etc.).

### Implant design generation and positioning

After pre-surgical planning steps (e.g. virtual bone resections when it is necessary to remove some of the bone tissue) have been performed, the system user (typically a medical professional/surgeon), in direct interaction with the system, determines the requirements for implant design (for example marks axes for the implant alignment, primary fixation points to the bone, determines screw threading directions (all on the 3D anatomical model), selects the fixation means (screw type, diameter, length), etc.). Based on this information the system automatically generates a preliminary implant design (3D virtual implant model) and positions the implant 3D model in respect to the patient's 3D anatomical model depending on the case, for example by aligning the implant mounting holes and their axes with the implant fixation points and fixation axes marked on anatomical model, or according to the resection planes, or by some combination of these approaches.

During the initial system development (system training) phase, after the surgeon has provided all the information requested by the system, the virtual 3D model of a patient-specific implant is generated automatically, together with the complete fixation solution to the human bone (in the 3D patient-specific anatomical model). However, this is only a preliminary design of the implant and the method of fixation to the bone. In this phase, the automatic 3D design of the implant is primarily intended to visualize the specifications provided by the system user (e.g. medical professional) regarding the implant design and its fixation to the 3D anatomical model.

The automatically generated implant design during the initial stage of the system development is subsequently adjusted (if there is a need) by the system user, re-engineered by an expert (e.g. a clinical engineer) responsible for the final design and finally validated during the pre-surgical planning phase by the surgeon when modelling pre-surgical planning with 3D models of the bone, implant, surgical guides, screws, and other implant-compliant elements supplied by the manufacturer. The system provides the system user with the interactive tools to correct external to the bone shapes of 3D implant model, and for pre-surgical planning modelling in 3D virtual space.

The generation of bone-contacting implant surfaces is performed according to the surface of the respective human bone segments (implant fit to the bone, not vice versa). Generation of the external to the bone implant shapes is based on the same mathematical models describing morphology of human bones which are used during 3D reconstruction in artefact affected areas.

Orthopaedic, maxillofacial and neurosurgical implants as a rule replicate natural bone morphology (the extent of replication varies with implant type). Therefore, parameterized mathematical models of individual human skeletal elements including their connections via joins enable the automatic generation of 3D models of implants that optimally replace the removed (missing) bone or portion thereof without interfering with adjacent tissues. Parameterisation is performed with respect to appropriate measurements, proportions, distances and positions of individual skeletal elements between individual clinical reference points, in combination with mathematical methods of 3D surface interpolation and extrapolation and the morphology of human skeletal elements (mirrored morphology from opposite site of human body can be used if it is missing in original site when corresponding radiological images are available).

Fixation holes on the implant body are placed in opposition to locations marked as fixation points on 3D anatomical model by the system user (medical professional), following patient-specific implant design rules.

If the specifications provided by the user (e.g. surgeon) for implant fixation to the bone contradicts the design rules for the implants, the system alerts the user to the potential contradiction (for example, indicates that the bone at the implant fixation point selected by system user is too thin or the selected screw is too long). While the user can always ignore the system alert, this is reflected in the generated pre-surgical planning protocol.

When the system reach mature phase and the clinical database contains sufficient structured data describing what implant design solutions have been used in the respect to the pathology treated (in respect to the expression of the pathology in the 3D anatomical model) and the training of the system on automatically generating 3D models of implants using convolutional neural network has completed, the system will be able to generate an implant design that not only meets the system user expectations, but will also simplify the job of the expert (e.g. clinical engineer) performing the implant design.

During the neural network training process, the system compares an automatically generated 3D implant model with a corresponding 3D model designed by the manufacturer and validated by the system user. Both the system, as part of the automated patient-specific implant generation process, and an expert (e.g. clinical engineer, as the manufacturer's representative), during implant design process, mark reference points on the implant's 3D models to link them with clinical and other reference points, established by system user, such as implant fixation points to the bone marked on 3D anatomical model. This allows two alternative 3D models of the patient-specific implant to be compared with each other and in respect to pre-processed 3D anatomical model.

Ideally, the expert will only have to test the design of the implant using the finite element method (FEA), which will significantly reduce implant design time and reduce labour costs. In the event of a positive FEA test, the 3D model of the implant, along with the 3D models of the surgical guides and other components of implant kit, will be submitted to the user for validation. Implant design validation will continue to be performed by the system user, as in the initial, training phase, through pre-surgical planning in 3D virtual space.

The system will only, in exceptional cases, contact the manufacturer for manual design of an implant.

The above description is a slightly simplified description of the 3D implant model generation functionality, because in reality the system training is continuous and is performed whenever new clinical case data with specific features is added to the clinical database and it reaches a threshold beyond which that would make sense for continuous convolutional neural network training.

When the system automatically generates a patient-specific implant design, its automatic positioning relative to the 3D anatomical model is quite trivial. However, the system additionally estimates the angle at which the implant will be inserted into the human body. When selecting a site for a surgical incision, the surgeon has to follow special rules to minimize the adverse effects of the incision on blood circulation and tissue innervation. The system also evaluates whether negative angles will occur between the implant and the bone on the contact surface when the implant is inserted at a given angle. To implement this functionality, an exemplar model is used to identify optimal surgical incision locations with respect to the surgery object.

### Design validation in the stage of pre-surgical planning

The evaluation of the pre-surgical plan is performed using the validation functionality. During validation, the user evaluates and validates the implant insertion angles, reassesses the design and construction of the implant itself as well as the surgical guide(s) used in the surgery, the accompanying instrument kits and any other relevant information.

Validation is performed according to multi-parameter validation protocols, which are self-adjusting to a specific clinical case. Validation is designed to ensure that all possible aspects of pre-surgical planning are taken into account and that the designed tool will be used appropriately during surgery and in the further recovery of the patient.

However, the validation protocols that are an integral part of the system do not cover the full variety of clinical cases and the specifics of their surgical treatment. If the system determines that due to the specificity of the clinical pathology it cannot offer a comprehensive pre-surgical validation protocol for this case, it should inform the system user. The system also provides the system user with instrumental tools that enable the system user to supplement an existing protocol or formulate a new pre-surgical planning validation protocol and associate it with his specific clinical case. However, for this protocol to be parameterized and included in the system-supported set of validation protocols, it must be reviewed by an expert.

After the surgery, the system can receive feedback from the system user that assesses the suitability of the medical device, provides a description of the surgery (surgical protocol), and evaluates the patient's condition after the surgery. In addition, a few months after the surgery, a description of the patient's recovery period or any complications arising from the medical devices or solutions chosen can be provided by the system user. This information, along with medical device ordering and pre-surgical planning data, may be stored on clinical database.

As a result, the clinical database is constantly being updated with new clinical cases. The clinical database is a source of structured data on clinical cases and their treatment and is used to search for similar clinical cases and for the system self-training. Once a system user has found a similar clinical case in the clinical database, he or she can select a pre-surgical planning protocol for individual application associated with this similar clinical case to validate his or her pre-surgical plan.

Those skilled in the art will appreciate that while the foregoing has described embodiments of the present invention, the present invention should not be limited to the specific configurations and methods disclosed in this description of these embodiments. Those skilled in the art will recognise that present invention has a broad range of applications, and that the embodiments may take a wide range of modifications without departing from any inventive concept as defined in the appended claims.

## Claims

1. A method, implemented in a computer system, of determining, from imaging data and clinical case data the position of a plurality of clinical reference points on a 3D bone model of a portion of the human body, the method including the steps of:
generating a patient-specific 3D bone model from the imaging data;
zoning the patient-specific 3D bone model into segments and determining pathology-affected segments and pathology-free segments of the 3D bone model based on the clinical case data;
determining, from a plurality of stored parametrized exemplar models of parts of the human skeleton system, each including one or more clinical reference points within healthy norms, an exemplar model corresponding to each of the segments;
determining, from a plurality of stored parametrized pathology base models, a pathology base model corresponding to each pathology-affected segment or segments of the patient-specific 3D anatomical model, which most closely matches the clinical case data;
determining the clinical reference points falling in the pathology-free segments using bone-specific algorithms based on the determined exemplar model; and
determining the clinical reference points of the pathology-affected segments of the patient-specific 3D bone model using bone-specific algorithms based on the determined exemplar model adjusted using the determined pathology base model.

2. A method according to claim 1 further including the step of validating the accuracy of the determined clinical reference points using a convolutional neural network which has been previously trained with problem / solution pairs consisting of two sets of clinical reference points, representing the results of an automatic determination of each clinical reference point and their validated counterparts.

3. A method according to claim 1 or claim 2 wherein the steps of determining the clinical reference points use a hierarchical geometric model which represents the region of the bone around a reference point and is composed of a set of geometric constraints on a 3D bone model as well as of the set of positive and negative primitive volumes.

4. A method according to claim 2 wherein the steps of determining clinical reference points also uses the convolutional neural network.

5. A method according to claims 1 and 2 wherein the step of zoning includes the steps of:
coarse zoning the 3D bone model to localize clinical reference points within sub-exemplar models and to separate pathology-affected segments from pathology-free segments; and
fine segmenting the 3D bone model into segments based on already determined clinical reference points and placing those segments into a hierarchy, representing a geometrical model of 3D clinical-anatomical data sets.

6. A method according to any one of the preceding claims wherein the plurality of stored parameterized exemplar models and/or the plurality of stored parameterized pathology base models include a plurality of models for which the clinical reference points have previously been determined using a method according to any one of the preceding claims.

7. A method, implemented in a computer system, of 3D pre-surgical planning, the method including the steps of:
providing the computer system with a parametrized description of the clinical case pathology data and uploading radiological data of the human skeleton element affected by clinical case pathology;
generating a patient-specific 3D bone model of the human skeleton element from the imaging data;
determining the position of a plurality of clinical reference points in the patient-specific 3D bone model using a method according to any of claims 1 to 6;
generating a preliminary design of a patient-specific implant or a patient-specific surgical guide based on the patient-specific 3D bone model and at least one determined clinical reference point.

8. A method according to claim 7 further including the step of searching for clinical cases of interest for the parametrized description of the clinical case pathology data by using one or more of: queries based on clinical reference points, anthropometric or cephalometric measurements, and surgical planning decisions used, as well as comparing 3D anatomical models representing both anthropometric characteristics of anatomical models and expressions of the clinical pathology in a 3D form.

9. A method according to any one of the previous claims, wherein the stored parametrized exemplar models of the human skeleton system are updated by the system in an iterative way using a convolutional neural network, which has been trained on structured and validated clinical case data stored in the computer system and the updates are performed both to the entire anatomical model and to individual segments thereof.

10. A method according to any one of the previous claims, wherein the stored clinical pathology base models are updated by the system in an iterative way using a convolutional neural network, which has been trained on structured and validated clinical cases data stored in the computer system, and links a stored clinical pathology base model with a variety of pathology expressions in 3D structured real clinical case data, optionally further including the step of performing parametrization of pathology description of a clinical case, provided by the system user, and relating this description with the base model of the relevant clinical pathology.

11. A method of pre-surgical planning using standard implants, the method including the step of determining the position of at least one clinical reference point using a method according to any one of claims 1 to 6, and selecting a best fitting standard implant from a stored library of standard implants and validating the selected best fitting standard implant with respect to the generated patient-specific 3D anatomical model.

12. A computer program comprising computer readable instructions which, when run on suitable computer apparatus, cause the computer apparatus to perform the method of any one of the preceding claims.

13. A computer readable medium having stored thereon, the computer program of claim 12.

14. An apparatus having a processor specifically adapted to carry out the steps of the method as claimed in any one of claims 1 to 13 and/or to run the computer program of claim.

15. An apparatus according to claim 14 which is arranged to be connected to a network and to provide user access to perform the method via a web browser.
